# EUROPEAN PATENT APPLICATION

(11) **EP 3 772 661 A1**
(43) Date of publication of application: **10.02.2021**
(21) Application number: 19191130.4
(22) Date of filing: 09.08.2019
(51) Int. Cl.: G01S 5/00, G01S 5/02

(54) **DEVICE LOCALISATION BASED ON POI DATA AND PAYMENT TRANSACTION DATA**

(71) Applicant: HERE Global B.V., 5611 ZT Eindhoven (NL)
(72) Inventor: IVANOV, Pavel, 33100 Tampere (FI); WIROLA, Lauri Aarne Johannes, 33100 Tampere (FI); NURMINEN, Henri Jaakko Julius, 33100 Tampere (FI)
(74) Representative: Cohausz & Florack

(57) **Abstract**

It is inter-alia disclosed a method comprising obtaining payment-related data being associated with a short-range payment transaction of a mobile payment entity, and determining a location estimate of the mobile payment entity at least partially based on the payment-related data and point of interest data.

## Description

### FIELD OF THE DISCLOSURE

The invention relates to the field of providing location estimates for mobile payment entities.

### BACKGROUND

Indoor positioning requires novel systems and solutions that are specifically developed and deployed for this purpose. The "traditional" positioning technologies, which are mainly used outdoors, i.e. satellite and cellular positioning technologies, cannot deliver such performance indoors that would enable seamless and equal navigation experience in both environments. The required positioning accuracy (2-3 m), coverage (∼100%) and floor detection are challenging to achieve with satisfactory performance levels with the systems and signals that were not designed and specified for the indoor use cases in the first place. Satellite-based (e.g. GNSS) radio navigation signals simply do not penetrate through the walls and roofs for the adequate signal reception and the cellular signals have too narrow bandwidth for accurate ranging by default.

Several indoor-dedicated solutions have already been developed and commercially deployed during the past years e.g. solutions based on pseudolites (GPS-like short-range beacons), ultra-sound positioning, BTLE signals and Wi-Fi fingerprinting. What is typical to these solutions is that they may require either deployment of totally new infrastructure (beacons, tags and so on) or manual exhaustive radio surveying of the buildings including all the floors, spaces and rooms. This is rather expensive and will take a considerable amount of time to build the coverage to the commercially expected level, which in some cases narrowed the potential market segment only to very thin customer base e.g. for health care or dedicated enterprise solutions. Also, the diversity of these technologies makes it difficult to build a globally scalable indoor positioning solution, and the integration and testing will become complex if a large number of technologies needs to be supported in the consumer devices, such as smartphones.

For an indoor positioning solution to be commercially successful, that is, 1) being globally scalable, 2) having low maintenance and deployment costs, and 3) offering acceptable end-user experience, the solution needs to be based on an existing infrastructure in the buildings and on existing capabilities in the consumer devices. This leads to an evident conclusion that the indoor positioning needs to be based on Wi-Fi- and/or Bluetooth (BT)-technologies that are already supported in almost every smartphone, tablet, laptop and even in the majority of the feature phones. It is, thus, required to find a solution that uses the Wi-Fi- and BT-radio signals in such a way that makes it possible to achieve 2-3 m horizontal positioning accuracy, close to 100% floor detection with the ability to quickly build the global coverage for this approach.

For instance, radio-based indoor positioning that models e.g. the Wi-Fi-radio environment (or any similar radio e.g. Bluetooth) from observed Received Signal Strength (RSS)-measurements as 2-dimensional radio maps may be used and is hereby able to capture the dynamics of the indoor radio propagation environment in a compressible and highly accurate way. This makes it possible to achieve unprecedented horizontal positioning accuracy with the Wifi-signals only within the coverage of the created radio maps and also gives highly reliable floor detection.

Huge volumes of indoor Wi-Fi-measurements data could be harvested via crowd-sourcing if the consumer devices were equipped with the necessary functionality to enable the Wi-Fi-data collection as a background process, naturally with the end-user consent. It could also be possible to use volunteers to survey the sites (buildings) in exchange of reward or recognition and get the coverage climbing up globally in the places and venues important for the key customers. However, the technical challenges related to the harvesting, processing, redundancy, ambiguity and storing the crowd-sourced data need to be understood and solved first, before the Wi-Fi radioman creation can be based on the fully crowd-sourced data.

For instance, when it comes to indoor crowd-sourcing obtaining references indoors is still a big challenge. Because GNSS (e.g. GPS) does not work indoors in general, sensor-based solutions quickly diverge in the absence of absolute position reference (such as GPS fixes). Therefore, any additional source of location information may be of great use.

### SUMMARY OF SOME EMBODIMENTS OF THE INVENTION

It is inter-alia an object of the present invention to improve location detection.

According to an exemplary aspect of the invention, a method is disclosed, which comprises obtaining payment-related data being associated with a short-range payment transaction of a mobile payment entity, and determining a location estimate of the mobile payment entity at least partially based on the payment-related data and point of interest data.

The method according to the exemplary aspect of the invention may, for example, at least partially be performed by an apparatus, wherein the apparatus may be a mobile payment entity or a component of a mobile payment entity, and, for instance, it may be the mobile payment entity which performs the short-range payment transaction. Or, as an example, the apparatus may be at least one different device (the device being different from the mobile payment entity which performs the short-range payment transaction), wherein the at least one different device may be at least one server.

According to the exemplary aspect of the invention, furthermore, an apparatus is disclosed, which comprises means for at least partially realizing the method according to the exemplary aspect of the invention. The means of the apparatus may be implemented in hardware and/or software. They may comprise for instance at least one processor for executing computer program code for realizing the required functions, at least one memory storing the program code, or both. Alternatively, they could comprise for instance circuitry that is designed to realize the required functions, for instance implemented in a chipset or a chip, like an integrated circuit. In general, the means may comprise for instance one or more processing means such as a processor and a memory. Optionally, the apparatus may comprise various other components, like a radio interface, a data interface, a user interface etc.

For example, the apparatus comprises at least one processor and at least one memory including computer program code, the at least one memory and the computer program code configured to, with the at least one processor, cause an apparatus at least to perform at least partially the method and/or the steps of the method according to the exemplary aspect of the invention.

The apparatus may be a mobile device or a component of a mobile device, and, for instance, it may comprise the mobile payment entity which performs the short-range payment transaction. Or, as an example, the apparatus may be at least one different device (the device being different from the mobile payment entity which performs the short-range payment transaction), wherein the at least one different device may be at least one server or at least one different apparatus like a mobile device being different from the mobile payment entity.

For instance, if the apparatus is at least one different device (or at least one different apparatus) being different from the mobile payment entity which performs the short-range payment transaction this might cover a scenario in which an actual payment is done by the mobile payment entity (e.g. a token such as a bank card, wherein the mogile payment entity performs the short-range payment transaction), and wherein information about the transaction is sent to the apparatus (the at least one different device) such that apparatus obtains the payment-related data being associated with a short-range payment transaction of the mobile payment entity, wherein this transmission could be performed via a payment system and/or bank server(s). Thus, in this example, for instance the apparatus may receive instant information about payment made by another authentification token (which is the payment entity which performs the short-range payment transaction and thus provides the payment-related data being associated with a short-range payment transaction of the mobile payment entity) such as bank card.

According to the exemplary aspect of the invention, furthermore, a system is disclosed, which comprises the apparatus. Furthermore, if the apparatus is not the mobile payment entity which performs the short-range payment transaction, the system might comprise the mobile payment entity which performs the short range payment transaction and the apparatus might be configured to obtain (at least a part or all of) the payment-related data from the mobile payment entity, e.g. receiving (at least a part or all of) the payment-related data from the mobile payment entity via a network interface (and e.g. via the internet).

For instance, the mobile payment entity may be an Internet-of-Thing (IoT) device, a smart home device, a smartphone, a tablet computer, a notebook computer, a smart watch, a smart band, a token or a bank card.

For instance, the mobile payment entity is enabled for or support performing short-range payment transactions with another device, e.g. a contactless payment transaction with another device, wherein this other device may be connected to a cashier or may be a part of a cashier. As an example, the short-range payment transaction performed between the mobile payment entity and the other device (e.g. a cashier or a reader of a cashier) requires a short distance between the mobile payment entity and the other device (e.g. a cashier or a reader of a cashier) (otherwise no payment transaction is possible between the mobile payment entity and the other device), wherein, for instance, the short distance between the mobile payment entity and the other device (e.g. a cashier or a reader of a cashier) must be less than 5m, 2m, 1m, 0.5m, 0.2m, 0.1m, 0.05m, or 0.02m. Thus, it may be assumed that a user of the mobile payment entity must bring (or move) the mobile payment entity in proximity of the other device (e.g. a cashier or a reader of a cashier) such that the payment transaction can be performed. For instance, as explained above, this mobile payment entity may be part of the apparatus or may be a mobile payment entity being different from the apparatus.

The short range payment transaction functionality of the mobile may use a short-range communication link in order to communicate with the other device for performing the contactless payment transaction. For instance, payment transaction of the mobile may be configured to establish a short-range communication link with a cashier of a business entity (which might be any kind of a shop), e.g. if a user of the mobile payment entity moves the mobile payment entity over a reader of the cashier such that the short range payment transaction of the mobile payment entity can be performed. As an non-limiting example, the short range payment transaction may be a contactless payment transaction which might use radio-frequency identification (RFID) or near field communication (NFC, e.g. Samsung Pay, Apple Pay, Google Pay, Fitbit Pay, Merpay or any bank mobile application that support contactless payment) or a magnetic reading system, wherein the contactless payment transaction may be configured for making secure payments. RFID and NFC and magnetic reading system are three examples of the above-mentioned short-range communication link, but it has to be understood that other technologies for short-range communication may be used by the contactless payment transaction functionality (of the mobile payment entity and the corresponding other device, which might be a cashier or a reader of a cashier). Furthermore, it might be assumed that contactless payments of the mobile payment entity are made in close physical proximity with respect to the other device, e.g. the distance between mobile payment entity and the other device must be less than 5m, 2m, 1m, 0.5m, 0.2m, 0.1m, 0.05m, or 0.02m, wherein this distance might be the distance between an antenna of the mobile payment entity used for short-range communication link and the reader of the other device.

When the mobile payment entity performs a short-range payment transaction with the other device payment-related data being associated with this payment transaction are received by the mobile payment entity. At least a part (or all) of this received payment-related data is obtained by apparatus when obtaining payment-related data being associated with a payment transaction of a mobile payment entity.

The apparatus determines a location estimate of the mobile payment entity at least partially based on the obtained payment-related data and point of interest data.

Thus, for instance, said determining a location estimate of the mobile payment entity at least partially based on the obtained payment-related data and point of interest data might comprise determining which location of the point of interest data can be associated with the obtained payment-related data, and this determined location may be represent the determined location estimate of the mobile payment entity. For instance, as mentioned above, it may be assumed that the short-range payment transaction of the mobile payment entity is in proximity to the other device, and it may be assumed that this other device is positioned at a fixed location. Thus, the obtained payment-related data may (at least partially) be used to try to identify the other device (e.g. a cashier or a reader of the cashier) and/or a business entity (e.g. a shop) in which the other device is located by means of searching the point of interest data and by comparing the payment-related data with the point of interest data in order to identify the other device and/or a business entity (e.g. a shop), wherein the point of interest data may comprise the location of the identified business entity and/or the location of the identified other device. Then, this location may be the determined location estimate of the mobile payment entity.

As an example, a user of mobile payment entity may perform a short-range payment transaction when moving mobile payment entity close to other device (e.g. cashier or reader of cashier), wherein this other device is located in a business entity which might represent a shop or the like. Since the mobile payment entity is in proximity with the other device a short-range-communication link between the mobile payment entity and the other device may be established and the short-range payment transaction can be performed via this short-range communication link.

Payment-related data being associated with this short-range payment transaction is then obtained and, at least partially based on these payment-related data and point of interest data, the location of the mobile payment entity can be estimated, since the payment-related data may be used to identify the location of the business entity (or the cashier or reader of the cashier of the business entity), e.g. by means of identifying the respective business entity (or the cashier or reader of the cashier) by using the point of interest data and by using, at least partially, the payment-related data. In particular, the payment-related data may comprise information which is configured to identify, at least partially, the business entity at which the payment transaction was performed. For instance, if it is not possible to identify the business entity (or the cashier or reader of the cashier of the business entity) in the point of interest data, said determining a location estimate of the mobile payment entity at least partially based on the obtained payment-related data and point of interest data might lead to a negative result, e.g. a result indicating that it is not possible to determine the location estimate.

As an example embodiment, said point of interest data comprises one or more point of interest information, wherein each point of interest information of the one or more point of interest information is associated with a business entity which is configured to provide payment for mobile payment entities and is associated with a location of the respective business entity.

As an example embodiment, said determining a location estimate of the mobile payment entity comprises detecting which location of the one or more point of interest information can be associated with the payment-related data, and determining the location estimate of the mobile payment entity to be the location associated with the point of interest information which is detected to be associated with the payment-related data.

As an example embodiment, the location of the business entity associated with a point of interest information of the one or more point of interest information represents the location of a cashier of the business entity.

As an example embodiment, said detecting which location information of the one or more point of interest information can be associated with the payment-related data comprises detecting which point of interest information of the one or more point of interest information matches best with said payment-related data.

As an example embodiment, said payment-related data comprises identifier information of the business entity being associated with the payment transaction, and wherein said detecting which point of interest information of the one or more point of interest information matches best with said payment-related data comprises detecting which business entity associated with a point of interest information of the one or more point of interest information matches best with the identifier information of the business entity being associated with the payment transaction.

As an example embodiment, said identifier information of the business entity being associated with the payment transaction comprises a name information of the business entity being associated with the payment transaction and wherein each point of interest information of the one or more point of interest information comprises a name information of the business entity associated with the respective point of interest information, and wherein said detecting which business entity associated with a point of interest information of the one or more point of interest information matches best with the identifier information of the business entity being associated with the payment transaction comprises determining which name information of a business entity associated with a point of interest information of the one or more point of interest information matches best with the name information of the business entity of the payment-related data.

As an example embodiment, the location of the business entity of a point of interest information of each point of interest information of the one or more point of interest information fulfills a distance criterion with respect to a location information associated with the mobile payment entity, wherein, in particular, said location information associated with mobile payment entity represents a coarse mobile payment entity location information.

As an example embodiment, said location information comprises an information on a previous location estimate of the mobile payment entity, in particular a previous location estimate obtained by one of the following:
(i) a GNSS based positioning of the mobile payment entity;
(ii) a radio-network based positioning of the mobile payment entity,
(iii) a location estimation at least partially obtained based on previous payment related data and point of interest data,
(iv) a location estimation performed by a mobile device being different from the mobile payment entity.

As an example (iv), a location estimation performed by the mobile device being different from the mobile payment entity may be used as position information of the mobile payment entity even if this position information deviates from the current position of the mobile payment entity. The mobile being different from the mobile payment entity might be a smart home device, a smartphone, a tablet computer, a notebook computer, a smart watch or a smart band. As an example, it might be assumed that the mobile device is carried by a user who performs the mobile payment by means of mobile payment entity (which might be a token or a bankcard) and thus the mobile device might be considered to be associated (e.g. associated locally) with the mobile payment entity, and, therefore, it might be assumed that a location estimation performed by the mobile device may be used as position information of the mobile payment entity.

As an example embodiment, it is disclosed to select the one or more point of interest information from a plurality of point of interest information based on the distance criterion.

As an example embodiment, it is disclosed to associate mobile payment entity related measurement data with the determined location estimate of the mobile payment entity, wherein, in particular, the mobile payment entity related measurement data comprises at least one of the following:
(i) a radio scan;
(ii) a temperature;
(iii) a pressure.

Furthermore, as an example, said mobile payment entity related measurement date might comprise any kind of measurement performed by the mobile payment entity and/or a mobile device, e.g. audio signal measurement and/or image signal measurement.

As an example embodiment, at least a part of the payment entity related measurement data is obtained by the mobile payment entity and/or at least a part of the payment entity related measurement data is obtained by a mobile device.

For instance, the mobile payment entity may be a token or a bank card and the mobile payment entity related measurement data is obtained (or measured) by a mobile device (being different from the mobile payment entity), wherein, for instance, the mobile device might be a smart home device, a smartphone, a tablet computer, a notebook computer, a smart watch or a smart band. As an example, it might be assumed that the mobile device is carried by a user who performs the mobile payment by means of the token or the bankcard and thus the mobile payment entity related measurement data can be considered to be related with the mobile payment entity (and therefore can be considered to represent mobile payment entity related measurement data) since the mobile device can be assumed to be in proximity with the mobile payment entity.

Or, for instance, the mobile payment entity may be a mobile device, e.g. a smart home device, a smartphone, a tablet computer, a notebook computer, a smart watch or a smart band, the mobile device is configured to obtain the mobile payment entity related measurement data, e.g. by performing the respective measurement.

As an example embodiment, said payment-related data comprises time information regarding the payment transaction, and it is disclosed to check whether a time difference between previously obtained mobile payment entity related measurement data and the time information of the payment-related information is less than a predefined time difference threshold, and if yes, associating the previously obtained mobile payment entity related measurement data with the determined location estimate of the mobile payment entity.

As an example embodiment, it is disclosed to, if said checking yields a negative result, causing to obtain new mobile payment entity measurement related data and associating the newly obtained mobile measurement device related data with the determined location estimate of the mobile payment entity.

For instance, in case that the mobile payment entity related measurement data is obtained (or measured) by a mobile device being different from the mobile payment entity, said causing to obtain new mobile payment entity measurement related data may comprise causing the mobile device being different (from the mobile payment entity) to obtain new mobile payment entity measurement related data.

Or, for instance, if the mobile payment entity is a mobile device and the mobile device is configured to obtain the mobile payment entity related measurement data, said causing to obtain new mobile payment entity measurement related data may comprise causing the mobile payment entity to obtain new mobile payment entity measurement related data.

As an example embodiment, it is disclosed to, after said obtaining payment-related data being associated with a payment transaction of a mobile payment entity, causing to obtain mobile payment entity related measurement data and associating the obtained mobile payment entity related measurement data with the determined location estimate of the mobile payment entity.

For instance, in case that the mobile payment entity related measurement data is obtained (or measured) by a mobile device being different from the mobile payment entity, said causing to obtain mobile payment entity measurement related data may comprise causing the mobile device being different (from the mobile payment entity) to obtain mobile payment entity measurement related data.

Or, for instance, if the mobile payment entity is a mobile device and the mobile device is configured to obtain the mobile payment entity related measurement data, said causing to obtain mobile payment entity measurement related data may comprise causing the mobile payment entity to obtain mobile payment entity measurement related data.

As an example embodiment, said short-range payment transaction is a contactless payment transaction.

For instance, of the mobile payment entity which performs the short-range payment transaction is a token (e.g. a bank card) then said payment transaction may be a payment made with a token.

As an example embodiment, it is disclosed that the method is performed by the mobile payment entity, the method comprising performing the short-range payment transaction, and wherein said obtained payment-related data being associated with a short-range payment transaction of a mobile payment entity is payment-related data obtained from the performed short-range payment transaction.

As an example embodiment, it is disclosed that the method is performed by an apparatus being different from the mobile payment entity, wherein said obtained payment-related data being associated with a short-range payment transaction of a mobile payment entity is payment-related data received from the mobile payment entity, in particular via a server, e.g. via a payment system and/or bank server(s).

As an example embodiment, it is disclosed, it is disclosed that said mobile payment entity is a token, in particular an authentication token like a bank card.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE FIGURES

- Fig. 1: is a schematic block diagram of an example embodiment of an apparatus according to the invention;
- Fig. 2: is a flow chart illustrating an example embodiment of a method 200 according to the invention (which may represent an example operation in the apparatus of Figure 1);
- Fig. 3: is a picture of an exemplary embodiment of a system according to the invention;
- Fig. 4: is a flow chart illustrating an exemplary embodiment of a method 400 according to the invention;
- Fig. 5: is a flow chart illustrating an exemplary embodiment of a method 500 according to the invention;
- Fig. 6: is a flow chart illustrating an exemplary embodiment of a method 600 according to the invention;
- Fig. 7: is a block diagram of an exemplary embodiment of a mobile device according to the invention;
- Fig. 8: is a block diagram of an exemplary embodiment of a server according to the invention; and
- Fig. 9: is a schematic illustration of examples of tangible and non-transitory storage media according to the invention.

### DETAILED DESCRIPTION OF THE FIGURES

The following description serves to deepen the understanding of the present invention and shall be understood to complement and be read together with the description of example embodiments of the invention as provided in the above SUMMARY section of this specification.

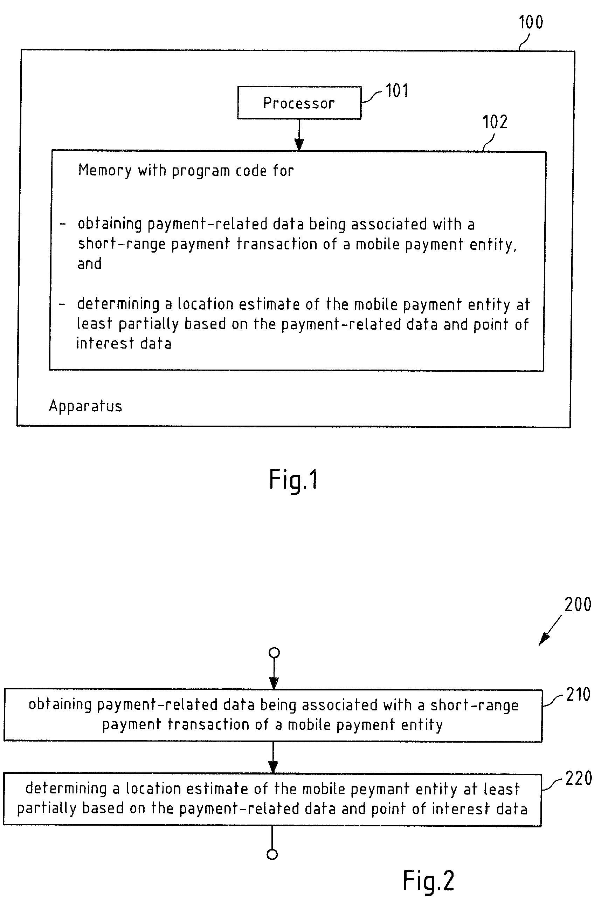

Figure 1 is a schematic block diagram of an example embodiment of an apparatus according to the invention. Apparatus 100 comprises a processor 101 and, linked to processor 101, a memory 102.

Memory 102 stores computer program code for obtaining payment-related data being associated with a short-range payment transaction of a mobile payment entity, and for determining a location estimate of the mobile payment entity at least partially based on the payment-related data and point of interest data. Processor 101 is configured to execute computer program code stored in memory 102 in order to cause an apparatus to perform desired actions. Memory 102 is thus an example embodiment of a non-transitory computer readable storage medium, in which computer program code according to the invention is stored. For instance, memory 102 may store computer program code for obtaining payment-related data being associated with a payment transaction of a mobile payment entity, and for determining a location estimate of the mobile payment entity at least partially based on the payment-related data and point of interest data.

Apparatus 100 could be a server or a cloud component or any other kind of mobile or stationary device. For instance, said apparatus 100 may represent a plurality of apparatus are used, wherein each apparatus may comprise a processor 101, and linked to processor 101, a memory 102, wherein memory 102 at least partially stores computer program code for obtaining payment-related data being associated with a short-range payment transaction of a mobile payment entity and for determining a location estimate of the mobile payment entity at least partially based on the payment-related data and point of interest data. For instance, said plurality of apparatus may represent servers in a cloud interaction together for obtaining payment-related data being associated with a payment transaction of a mobile payment entity and for determining a location estimate of the mobile payment entity at least partially based on the payment-related data and point of interest data.

Apparatus 100 could equally be a component, like a chip, circuitry on a chip or a plug-in board, for any server, mobile or stationary device. Optionally, apparatus 100 could comprise various other components, like a data interface configured to enable an exchange of data with separate devices, a user interface like a touchscreen, a further memory, a further processor, etc.

An operation of the apparatus 100 will now be described with reference to the flow chart 200 of Figure 2. The operation is an example embodiment of a method according to the invention. At least one processor 101 (may be one processor 101 or a plurality of processors 101) and the program code stored in at least one memory 102 (may be one memory 102 or a plurality of memories 102) cause at least one apparatus (may be one apparatus ore a plurality of apparatuses) to perform the operation when the program code is retrieved from memory 102 and executed by processor 101. The at least one apparatus that is caused to perform the operation can be apparatus 100 or some other apparatus, for example but not necessarily a device comprising apparatus 100.

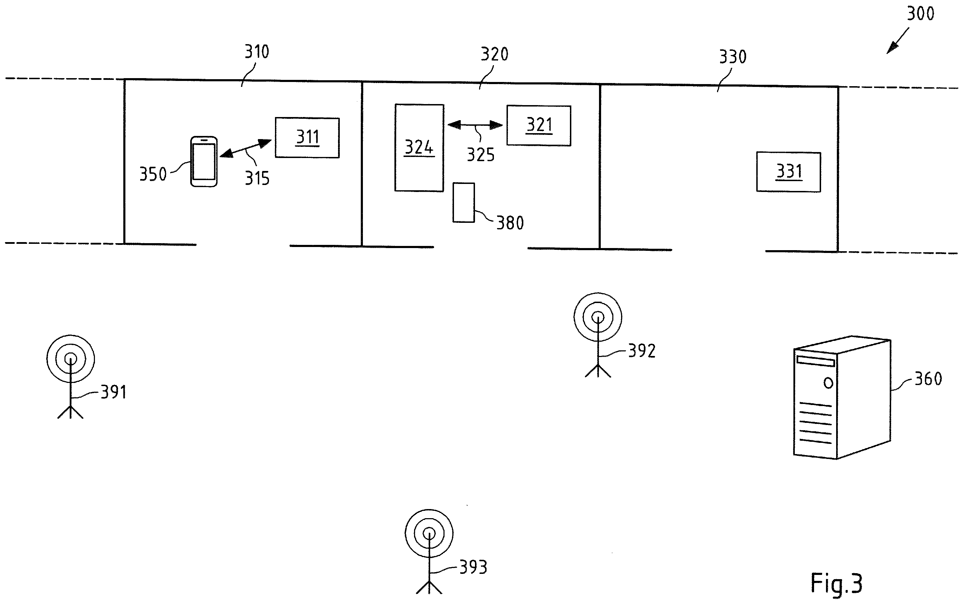

Furthermore, operation of apparatus 100 and of method 200 will be explained, without any limitation, with the example system 300 depicted in Fig 3, but it has to be understood that operation of apparatus 100 and/or method 200 is not limited to system 300.

The apparatus 100 obtains payment-related data being associated with a short-range payment transaction of a mobile payment entity (action 210 of method 200).

For instance, the mobile payment entity may be one of an Internet-of-Thing (IoT) device, smartphone, a tablet computer, a notebook computer, a smart watch, a smart glass, a smart band, a token (e.g. a bank card) wherein the mobile payment entity is enabled for or support performing short-range payment transactions with an other device, e.g. a contactless payment transaction with another device, wherein this other device may be connected to a cashier or may be a part of a cashier. As an example, the short-range payment transaction performed between the mobile payment entity and the other device (e.g. a cashier or a reader of a cashier) requires a short distance between the mobile payment entity and the other device (e.g. a cashier or a reader of a cashier) (otherwise no payment transaction is possible between the mobile payment entity and the other device), wherein, for instance, the short distance between the mobile payment entity and the other device (e.g. a cashier or a reader of a cashier) must be less than 5m, 2m, 1m, 0.5m, 0.2m, 0.1m, 0.05m, or 0.02m. Thus, it may be assumed that a user of the mobile payment entity must bring (or move) the mobile payment entity in proximity of the other device (e.g. a cashier or a reader of a cashier) such that the payment transaction can be performed.

As an example, the mobile payment entity may be mobile device 350 depicted in Fig. 3, wherein this non-limiting example of a mobile device 350 may be a smartphone, and/or may be mobile payment entity 324 depicted in Fig. 3, wherein mobile payment entity 324 may be a token like a bank card. The payment transaction functionality of the mobile payment entity (e.g. mobile device 350 or mobile payment entity 324) may use a short-range communication link in order to communicate with the other device for performing the contactless payment transaction. For instance, in system 300 the payment transaction of mobile device 350 may be configured to establish a short-range communication link 315 with a cashier of a business entity, e.g. short-range communication link 315 with casher 311 of business entity 310 (which might be any kind of a shop), e.g. if a user of the mobile device 350 moves the mobile device 350 over a reader of the cashier 311 such that the payment transaction of the mobile device 350 can be performed. As an non-limiting example, the payment transaction may be a contactless payment transaction which might use radio-frequency identification (RFID) or near field communication (NFC, e.g. Samsung Pay, Apple Pay, Google Pay, Fitbit Pay, Merpay or any bank mobile application that support contactless payment) or a magnetic reading system, wherein the contactless payment transaction may be configured for making secure payments. RFID and NFC and magnetic reading systems are three examples of the above-mentioned short-range communication link 315, but it has to be understood that other technologies for short-range communication may be used by the contactless payment transaction functionality (of the mobile device 350 and the corresponding other device, which might be a cashier, e.g. cashier 311, 321 or 331 or a reader of cashiers 311, 321, 331). Furthermore, it might be assumed that contactless payments of the mobile device 350 are made in close physical proximity with respect to the other device (e.g. one of cashiers 311, 312, 313 or a reader of cashiers 311, 321, 331), e.g. the distance between mobile device 350 and the other device (e.g. one of cashiers 311, 312, 313 or a reader of cashiers 311, 321, 331) must be less than 5m, 2m, 1m, 0.5m, 0.2m, 0.1m, 0.05m, or 0.02m, wherein this distance might be the distance between an antenna of the mobile device 350 used for short-range communication link and the reader of the other device.

For instance, if in system 300 the mobile payment entity is the mobile payment entity 324, the payment transaction of mobile payment entity 324 may be configured to establish a short-range communication link 325 with a cashier of a business entity, e.g. short-range communication link 325 with casher 321 of business entity 320 (which might be any kind of a shop), e.g. if a user of the mobile payment entity 324 moves the mobile payment entity 324 over a reader of the cashier 321 (or if the mobile payment entity 324 is swiped through a reader o cashier 324) such that the payment transaction of the mobile payment entity 324 can be performed. As an non-limiting example, the payment transaction may be a contactless payment transaction which might use radio-frequency identification (RFID) or near field communication (NFC) or a magnetic reading system, wherein the contactless payment transaction may be configured for making secure payments. RFID and NFC and magnetic reading system three examples of the above-mentioned short-range communication link 315, but it has to be understood that other technologies for short-range communication may be used by the contactless payment transaction functionality (of the mobile payment entity 324 and the corresponding other device, which might be a cashier, e.g. cashier 311, 321 or 331 or a reader of cashiers 311, 321, 331). Furthermore, it might be assumed that contactless payments of the mobile payment entity 324 are made in close physical proximity with respect to the other device (e.g. one of cashiers 311, 312, 313 or a reader of cashiers 311, 321, 331), e.g. the distance between mobile payment entity 324 and the other device (e.g. one of cashiers 311, 312, 313 or a reader of cashiers 311, 321, 331) must be less than 5m, 2m, 1m, 0.5m, 0.2m, 0.1m, 0.05m, or 0.02m, wherein this distance might be the distance between an antenna of the mobile device 350 used for short-range communication link and the reader of the other device.

When the mobile device 350 performs a short-range payment transaction with the other device (e.g. one of cashiers 311, 312, 313 or a reader of one of cashiers 311, 312, 313), payment-related data being associated with this payment transaction are received by the mobile device 350. At least a part of this received payment-related data is obtained by apparatus 100 in action 210, when obtaining payment-related data being associated with a payment transaction of a mobile device 350 (action 210 of method 200).

As as an example embodiment, if the mobile payment entity of method 200 is represented by the mobile device 350, method 200 may be performed by the mobile device 350 that performed the payment transaction, but method 200 could be also be performed by a separate apparatus (e.g. different apparatus or different device) being different from the mobile device 350 that performed the payment transaction, e.g. method 200 could be performed by another mobile device or by one or more servers, e.g. server 360 exemplarily depicted in Fig. 3, or by an apparatus being different from mobile device 350 that performed the payment transaction. Thus, for instance, apparatus 100 may be part or may represent mobile device 350 or may be part or may represent server 360 or may represent another apparatus (e.g. not depicted in system 300). System 300 is not limited to a single server 360, but may optionally comprise a plurality of servers (e.g. forming a server cloud). Accordingly, server 360 may be part of such a plurality of servers (e.g. a server cloud) or may be represented by such a plurality of servers (e.g. a server cloud). Server 360 may be configured to communicate with the mobile device 360, e.g. via a wireless connection, which might comprise a cellular connection and/or a Wi-Fi connection and/or a Bluetooth connection and/or any other wireless connection, wherein server 360 may be configured to receive the payment-related data being associated with a payment transaction of the mobile device 350 (i.e., the payment-related data of action 210 of method 200) via the wireless connection from the mobile device 350.

As as an example embodiment, if the mobile payment entity of method 200 is represented by the mobile payment entity 324, the apparatus 100 is at least one different device 100 (or at least one different apparatus 100) being different from the mobile payment entity which performs the short-range payment transaction (the mobile payment entity 324 depicted in Fig. 3) and this might cover a scenario in which an actual payment may be done by a token 324 such as a bank card (wherein the token such as a bank card is the mobile payment entity 324 which performs the short-range payment transaction), and wherein information about the transaction is sent to the apparatus 100 such that the apparatus 100 obtains the payment-related data being associated with a short-range payment transaction of the mobile payment entity 324 (action 210), wherein this transmission could be performed via a payment system and/or bank server(s), e.g. via server 360. As an example, apparatus 100 may be part of or may represent server 360 or may represent another apparatus (e.g. not depicted in system 300). Thus, in this example, for instance the apparatus 100 may receive instant information about payment made by another authentification token 324 (which is the mobile payment entity 324 which performs the short-range payment transaction and thus provides the payment-related data being associated with a short-range payment transaction of the mobile device) such as bank card.

The apparatus 100 determines a location estimate of the mobile payment entity (e.g. mobile device 350 or mobile payment entity 324) at least partially based on the payment-related data and point of interest data (action 220 of method 200).

Thus, for instance, in action 220 it may be determined which location of the point of interest data can be associated with the payment-related data obtained in action 210, and this determined location may be represent the location estimate of the mobile payment entity (e.g. mobile device 350 or mobile payment entity 324, or apparatus 100 if it comprises the mobile payment entity) device determined in action 220. For instance, as mentioned above, it may be assumed that the short-range payment transaction of the mobile payment entity (e.g. mobile device 350 or mobile payment entity 324 or apparatus 100 if it comprises the mobile payment entity) is in proximity to the other device (e.g. one of cashiers 311, 312, 313 or a reader of cashiers 311, 312, 313), and it may be assumed that this other device is positioned at a fixed location (e.g. a fixed location of cashiers 311, 312, 313 or a reader of cashiers 311, 312, 313). Thus, the payment-related data obtained in action 210 may be used to try to identify the other device (e.g. one of cashiers 311, 312, 313 or a reader of cashiers 311, 312, 313) and/or a business entity 310, 320, 330 (e.g. a shop) in which the other device is located by means of searching the point of interest data and by comparing the payment-related data with the point of interest data in order to identify the other device (e.g. one of cashiers 311, 312, 313 or a reader of cashiers 311, 312, 313) and/or a business entity 310, 320, 330 (e.g. a shop), wherein the point of interest data may comprise the location of the identified business entity 310, 320, 330 and/or the location of the identified other device (e.g. one of cashiers 311, 312, 313 or a reader of cashiers 311, 312, 313). Then, this location may be the location estimate of the mobile payment entity determined in action 220.

As a first example, a user of mobile device 350 may perform a short-range payment transaction when moving mobile device 350 close to other device 311 (cashier 311 or reader of cashier 311), wherein this other device 311 is located in a business entity 310 which might represent a shop or the like. Since the mobile device 350 is in proximity with the other device 311 (cashier 311 or reader of cashier 311) a short-range-communication link 315 between the mobile device 350 and the other device 311 can be established and the short-range payment transaction can be performed via this short-range communication link 315.

Or, as a second example, a user of mobile payment entity 324 may perform a short-range payment transaction when moving mobile payment entity 324 close to other device 321 (cashier 321 or reader of cashier 321) or when swiping mobile payment entity 324 through a reader of cashier 321 (e.g. if mobile payment entity 324 is a token comprising a magnetic stripe, like a bankcard with a magnetic strip), wherein this other device 321 is located in a business entity 320 which might represent a shop or the like. Since the mobile payment entity 324 is in proximity with the other device 321 (cashier 321 or reader of cashier 321) a short-range-communication link 325 between the mobile payment entity 324 and the other device 321 can be established and the short-range payment transaction can be performed via this short-range communication link 325.

Payment-related data being associated with this short-range payment transaction is then obtained in action 210 and in action 220, at least partially based on these payment-related data and point of interest data, the location of the mobile payment entity (e.g. mobile device 350 or mobile payment entity 324) can be estimated, since in the first example the payment-related data may be used to identify the location of the business entity 310 (or the cashier 311 or reader of cashier 311), e.g. by means of identifying the respective business entity 310 (or the cashier 311 or reader of cashier 311) by using the point of interest data and by using, at least partially, the payment-related data, or in the second example, the payment-related data may be used to identify the location of the business entity 320 (or the cashier 321 or reader of cashier 321), e.g. by means of identifying the respective business entity 320 (or the cashier 321 or reader of cashier 321) by using the point of interest data and by using, at least partially, the payment-related data) In particular, the payment-related data may comprise information which is configured to identify, at least partially, the business entity at which the payment transaction was performed.

For instance, said point of interest data may be stored in apparatus 100, e.g. in mobile device 350 and/or in server 360 and/or another apparatus.

Furthermore, as an example embodiment, method 200 may comprise assigning the location estimate determined in action 220 to the mobile payment entity (e.g. mobile device 350 or mobile payment entity 324 or apparatus 100 if it comprises the mobile payment entity), and, furthermore, may comprise assigning the time of the payment transaction of the mobile payment entity (the payment-transaction which served as basis for obtaining the payment-related data in action 210) to this location estimate of the mobile payment entity. For instance, the time of the payment transaction may be part of the payment-related dated obtained in action 210.

As an example embodiment, said point of interest data may comprise one or more point of interest information, wherein each point of interest information of the one or more point of interest information is associated with a business entity which is configured to provide payment for mobile payment entities and is associated with a location of the respective business entity. As an example, the location associated with a business entity of a respective point of interest information of the one or more point of interest information may comprise location coordinates being indicative of the location of the business entity, wherein, for instance, the location coordinates may include altitude and/or a floor index (e.g. the floor index being indicative of the floor of the business entity of the respective point of interest information of the one or more point of interest information.

For instance, with respect to the example system 300 depicted in Fig. 3, there might be a first business entity 310 which is configured to provide payment for mobile payment entities, e.g. via cashier 311 of the first business entity 310, wherein the point of interest data comprises point of interest information associated with the first business entity 310 and associated with a location of the first business entity 310. Furthermore, as an example, there might be a second business entity 310 which is configured to provide payment for mobile payment entities, e.g. via cashier 321 of the second business entity 320, wherein the point of interest data comprises point of interest information associated with the second business entity 320 and associated with a location of the second business entity 320. For instance, there might be a third business entity 330 which is configured to provide payment for mobile payment entities, e.g. via cashier 331 of the third business entity 330, wherein the point of interest data comprises point of interest information associated with the third business entity 330 and associated with a location of the third business entity 330. As a non-limiting example, a point of interest information of the one or more point of interest information of the point of interest data may represent (or may identify) a point of interest (POI).

As an example embodiment, the location of the business entity associated with a point of interest information of the one or more point of interest information may represent the location of a cashier 311, 312, 313 of the business entity 310, 320, 330 or the location of the room of the business entity 310, 320, 330 in which a cashier 311, 312, 313 of the business entity is located. For instance, location of the business entity associated with a point of interest information of the one or more point of interest information might comprise location coordinates being indicative of the location of the business entity, wherein, for instance, the location coordinates may include altitude and/or a floor index (e.g. the floor index being indicative of the floor of the business entity of the respective point of interest information of the one or more point of interest information.

Thus, in action 220 apparatus 100 may detect which point of interest information of the one or more point of interest information of the point of interest data can be associated with the payment-related data (obtained in action 210), wherein the location estimation of the mobile payment entity (e.g. mobile device 350 or payment entity 324 or apparatus 100 if it comprises the mobile payment entity) is determined to be the location associated with the detected point of interest information (which is detected to be associated with the payment-related data). For instance, said detecting which point of interest information of the one or more point of interest information of the point of interest data can be associated with the payment-related data might use correlations between at least a part of the payment-related data and a respective point of interest information of the one or more point of interest information of the point of interest data and might detect the point of interest information of the one or more point of interest information of the point of interest data which shows the best correlation with respect to between at least a part of the payment-related data. As an example, any well-suited information of the payment-related data may be used for building such a correlation, e.g. an identifier of the business entity 310, 320, 330 involved in the respective payment transaction between the mobile payment entity (e.g. mobile device 350 or mobile payment entity 324 or apparatus 100 if it comprises the mobile payment entity) and the other device (e.g. cashier 311, 321, 331 (or reader of the cashier) of the respective business entity 310, 320, 330). Accordingly, the payment-related data (obtained in action 210) may be used in action 220 in order to identify the point of interest information (as part of the point of interest data) at which the payment transaction between the mobile payment entity (e.g. mobile device 350 or mobile payment entity or apparatus 100 if it comprises the mobile payment entity) and the other device (e.g. cashier 311, 321, 331 (or reader of the cashier) of the respective business entity 310, 320, 330) was performed, and then, based on the identified (i.e. detected) point of interest information the location estimation of the mobile payment entity (e.g. mobile device 350 or mobile payment entity 324 or apparatus 100 if it comprises the mobile payment entity) is determined to be the location associated with the identified point of interest information (which is detected to be associated with the payment-related data).

For instance, said location associated with the identified point of interest information (which is detected to be associated with the payment-related data) might comprise coordinates being indicative of the location of the business entity of the identified point of interest information, wherein, for instance, the location coordinates may include altitude and/or a floor index (e.g. the floor index being indicative of the floor of the business entity of the respective point of interest information of the one or more point of interest information.

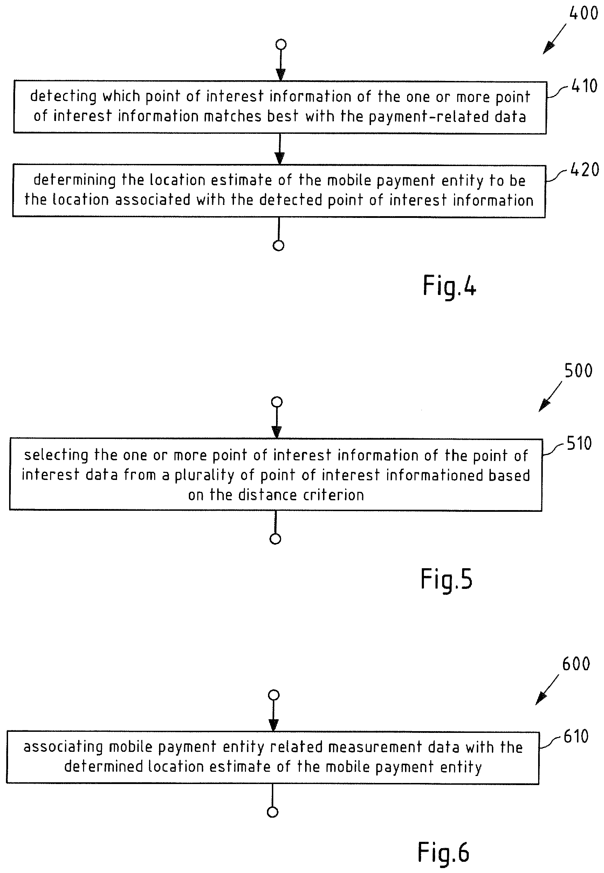

Fig. 4 is a flow chart 400 illustrating an exemplary embodiment of a method 400 according to the invention, wherein this flow chart 400 may be part or may correspond to action 220 of method 200. Without limiting the scope of the invention, it is assumed in the following that the apparatus 100 as described above with respect to Fig. 1 performs the steps of flow chart 400, wherein apparatus 100 may be a mobile device (e.g. mobile device 350) or a server, e.g. server 360 or another apparatus.

In action 410, said determining a location estimate of the mobile payment entity at least partially based on the payment-related data and point of interest data (action 220) comprises detecting which point of interest information of the one or more point of interest information matches best with said payment-related data. For instance, said above mentioned detecting which point of interest information of the one or more point of interest information of the point of interest data can be associated with the payment-related data might comprise action 220, i.e., detecting which point of interest information of the one or more point of interest information matches best with said payment-related data.

For instance, said detecting which point of interest information of the one or more point of interest information matches best with said payment-related data (action 410) might comprise comparing the payment-related data which each (or at least one) point of interest information of the one or more point of interest of the point of interest information in order to check which point of interest information of the one or more point of interest information of the point of interest information matches best with the payment-related data.

In action 420 the location estimation of the payment entities (e.g. mobile device 350 or mobile payment entity 324 or apparatus 100 if it comprises the mobile payment entity) is determined to be the location associated with the detected point of interest information (which is detected to be matches best with the payment-related data in action 410).

As an example, the point of interest information of the one or more point of interest information may be detected to match best with said payment-related data if (at least a part of) the point of interest information shows the best correlation with respect to the payment-related data (from the one or more point of interest information and/or the subset of point of interest information).

As an example embodiment, said payment-related data comprises identifier information of the business entity being associated with the payment transaction, and said detecting which point of interest information of the one or more point of interest information matches best with said payment-related data (action 410) comprises detecting which business entity associated with a point of interest information of the one or more point of interest information matches best with the identifier information of the business entity being associated with the payment transaction.

For instance, a point of interest information of the one or more point of interest information of the point of interest data may comprise identifier information for identifying the business entity of the respective point of interest information, and in action 410 it may be checked, e.g. for each (or at least one) point of interest information of the one or more point of interest information, which identifier information of a respective point of interest information of the one or more point of interest information matches best with the identifier information of the of the business entity being associated with the payment transaction.

For instance, the identifier information of the business entity being associated with the payment transaction may be a code associated with the business entity (e.g. a specific number), wherein this code may be unique and/or may be a name information (e.g. a name or a part of a name) of the business entity or any other well-suited identifier information of the business entity. It has to be understood that it might be not necessary that the identifier information of the business entity being associated with the payment transaction uniquely identifies the business entity, and it has to be understood that it is not necessary that there is a perfect match (e.g. 100%) between the identifier information of the business entity being associated with the payment transaction and the identifier information of a respective point of interest information of the one or more point of interest information which is considered to match best with this identifier information of the of the business entity being associated with the payment transaction.

As an example embodiment, said identifier information of the business entity being associated with the payment transaction comprises a name information of the business entity being associated with the payment transaction and wherein each point of interest information of the one or more point of interest information comprises a name information of the business entity associated with the respective point of interest information. In this example embodiment, said detecting which business entity associated with a point of interest information of the one or more point of interest information matches best with the identifier information of the business entity being associated with the payment transaction (action 410) may comprise determining which name information of a business entity associated with a point of interest information of the one or more point of interest information matches best with the name information of the business entity of the payment-related data.

Thus, apparatus 100 may use the name information of the business entity being associated with the payment transaction in order to check which point of interest information of the one or more point of interest information of the point of interest data is associated with the same name information or with a similar name information, e.g. by detecting for which point of interest information of the one or more point of interest information of the point of interest data the name information of the business entity of the respective point of interest information matches best with the name information of the business entity being associated with the payment transaction (of the payment-related data) in order to detect the point of interest information in action 410.

For instance, action 410 might comprise, for each (or at least one) point of interest information of at least one point of interest information of the one or more point of interest information, determining a similarity measure between the name information of the business entity being associated with the payment transaction and the name information associated with the respective point of interest information. The at least one point of interest information may be the one or more point of interest information or a subset of point of interest information of the the one or more point of interest information of the point of interest information, wherein the subset of point of interest information may be determined as will be exemplarily explained with respect to method 500 in Fig. 5. In action 410, the point of interest information for which the highest similarity measure was determined may be detected to be the point of interest information of the one or more point of interest information which matches best with the payment-related data.

As an example embodiment, the location of the business entity of a point of interest information of each point of interest information of the one or more point of interest information of the point of interest data fulfills a distance criterion with respect to a location information associated with the mobile payment entity (e.g. mobile device 350 or mobile payment entity 324 or apparatus 100 if it comprises the mobile payment entity), wherein, in particular, said location information associated with the mobile payment (e.g. mobile device 350 or mobile payment entitiy 324 or apparatus 100 if it comprises the mobile payment entity) may represent a coarse mobile payment entity location information.

For instance, the point of interest data may comprise a plurality of point of interest information, wherein each point of interest information of the plurality of interest information is associated with a business entity which is configured to provide payment for mobile payment entities and is associated with a location of the respective business entity and may be associated with an identifier information (e.g. a name information) of the respective business entity, and, as an example, the one or more point of interest information of the point of interest may represent a subset of one or more point of interest information of the plurality of point of interest information, wherein each point of interest information of the one or more point of interest information of the point of interest data fulfills a distance criterion with respect to a location information associated with the mobile payment entity (e.g. mobile device 350 or mobile payment entity or apparatus 100 if it comprises the mobile payment entity).

Said location information associated with the mobile payment entity (e.g. mobile device 350 or mobile payment entity 324 or apparatus 100 if it comprises the mobile payment entity) may represent a location estimate of the mobile payment entity (e.g. mobile device 350 or mobile payment entity 324 or apparatus 100 if it comprises the mobile payment entity) which has been performed previously (e.g. compared to the location estimate performed in action 220), e.g. it may be the last available location estimation of the mobile payment entity (e.g. mobile device 350 or mobile payment entity 324 or apparatus 100 if it comprises the mobile payment entity), e.g. even if this does not exactly correspond to the actual position. Thus, for instance, said location information comprises an information on a previous location estimate of the mobile payment entity (e.g. mobile device 350 or mobile payment entity 324 or apparatus 100 if it comprises the mobile payment entity), in particular a previous location estimate obtained by one of the following:
(i) a GNSS based positioning of the mobile payment entity (in particular if the mobile payment device is a mobile device, e.g. mobile device 350);
(ii) a radio-network based positioning of the mobile payment entity (in particular if the mobile payment device is a mobile, e.g. mobile device 350),
(iii) a location estimation at least partially obtained based on previous payment related data and point of interest data,
(iv) a location estimation performed by the mobile device 384 being different from the mobile payment entity.

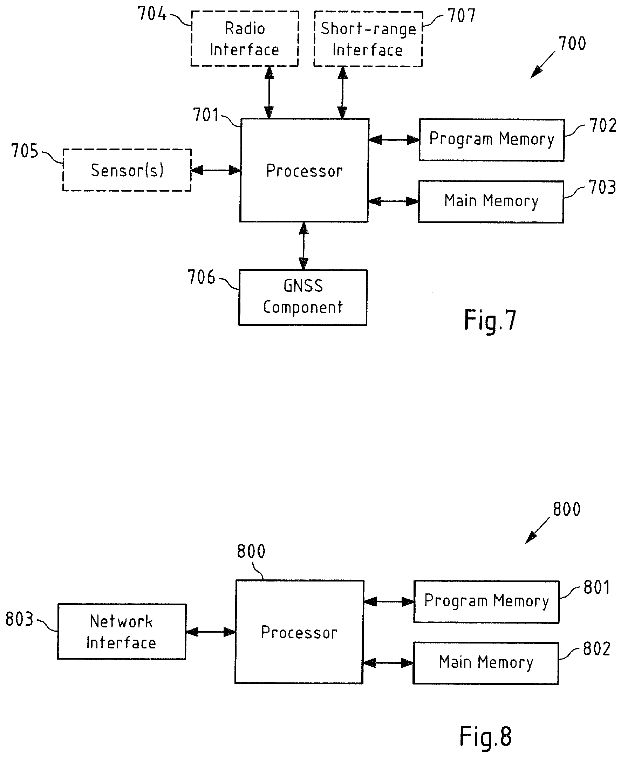

As an example (i), apparatus 100 (if it comprises the mobile payment entity) and/or the mobile payment entity might comprise a GNSS interface and might be configured to perform a GNSS based positioning, wherein in example (i), the mobile payment entity may preferably be a mobile device, e.g. mobile device 350). It may be now assumed without any limitation that in this example (i) the mobile payment entity is a mobile device, e.g. mobile device 350. Then, for instance, said location information of the mobile device 350 may represent a location estimation of the mobile device 350 being determined by GNSS based positioning, e.g. the last available GNSS location estimation of mobile device 350. For instance, before a user enters a building in which a business entity 310, 320, 330 which provides payment transaction for mobile devices, the mobile device 350 can estimate its location by means of GNSS based positioning since in the outdoor environment GNSS signals can be received. Then, this location estimation can be used as location information of the mobile device 350. For instance, apparatus 100 and/or mobile device 350 may comprise an GNSS interface which may comprise any kind of global navigation satellite signal receiver, for example a GPS receiver and/or a GLONASS receiver and/or a GALILEO receiver. The GNSS interface may be configured to receive corresponding satellite signals and to determine the current position of mobile device 350 based on the signals, e.g. possibly using provided assistance data, or to provide the signals (or at least a part of the signals) to an application of apparatus 100 such that the application determines the current position based on the provided signals. As an example, this application may be denoted as GNSS location application, wherein the GNSS location application may be considered to be part of a platform location manager of an operating system of the apparatus 100. GNSS related position may be understood in a way that the GNSS related position is not determined based on a non-GNSS positioning system, e.g. a radio network based positioning system like a Wi-Fi-based positioning system using fingerprints of access points (e.g. beacons) (e.g. optional access points 391, 392 and 393 depicted in Fig. 3) and a radio map to estimate the position of a mobile device (e.g. as explained with respect to optional radio interface 704 of mobile device 700 of Fig. 7).

And/or, as an example (ii), the apparatus 100 (if it comprises the mobile payment entity) and/or mobile payment entity might be configured to support radio-network based positioning (e.g. non GNSS based radio-network based positioning), and apparatus 100 (if it comprises the mobile payment entity) and/or mobile device 350 and/or mobile payment entity 324 may be enabled for support such a non-GNSS based radio positioning system, wherein in example (ii), the mobile payment entity may preferably be a mobile device, e.g. mobile device 350.). It may be now assumed without any limitation that in this example (i) the mobile payment entity is a mobile device, e.g. as part of apparatus 100 or the mobile device 350. This may be understood to mean that the apparatus 100 and/or mobile device 350 is configured to estimate (e.g. determine) or to cause estimating (e.g. determining) its position at least partially based on radio signal parameters of one or more radio signals (e.g. one or more terrestrial radio signals transmitted from access points or beacons, e.g. optional access points 391, 392 and 393 depicted in Fig. 3) obtained at this position (e.g. obtained as a scanning result of scanning for observable radio signals at this position). Estimating (e.g. determining) of a position of the apparatus 100 and/or mobile device 350 at least partially based on (a) radio signal parameter(s) may be understood to mean that the estimating is performed as a function of the radio signal parameter(s). It is however to be understood that the estimating may optionally depend on further information like a radio map. For example, such a radio map may be configured to enable apparatus 100 and/or mobile device 350 to estimate its position at least partially based on this radio map when the apparatus 100 and/or mobile device 350 is located in the area covered by the radio map. For example, the radio map is represented by radio map information which may be provided (e.g. transmitted) by a positioning server to the apparatus 100 and/or mobile device 350 and/or which may be hold available by the apparatus 100 and/or mobile device 350 (e.g. stored in memory means of the mobile device 350). Further exemplary details of this radio-network based positioning performed by apparatus 100 will be explained with respect to mobile device 700 depicted in Fig. 7, in particular with respect to optional radio interface 704 of mobile device 700.

Examples of such a terrestrial radio signal are a Bluetooth signal, a Bluetooth Low Energy (BLE) signal, a cellular network signal, an low-power wide-area network (LPWAN) signal or a Wireless Local Area Network (WLAN) signal. The Bluetooth standards are specified by the Bluetooth Special Interest Group and are presently available under https://www.bluetooth.com/. A cellular network may for example be mobile phone network like a 2G/3G/4G/5G cellular communication network or any other cellular communication networks, in particular successors of 5G. The 2G/3G/4G/5G cellular radio communication standards are developed by the 3GPP and presently available under http://www.3gpp.org/. Examples of LPWAN specifications are the LoRaWAN specification developed by the LoRa Alliance and presently available under https://lora-alliance.org/ as well as the Narrowband IoT (NB-IoT) specification developed by 3GPP and presently available under http://www.3gpp.org/. WLAN is for example specified by the standards of the IEEE 802.11 family (http://www.ieee.org/).

For instance, said radio-network based positioning of the apparatus 100 (if it comprises the mobile payment entity, and in particular a mobile payment entity representing a mobile device) and/or of the mobile device 350 may be at least one of:
(i) WLAN based positioning of the mobile device;
(ii) low-power wide-area network (LPWAN) positioning of the mobile device,
(iii) a Bluetooth based positioning of the mobile device;
(iv) a cellular based positioning of the mobile device.

Thus, for instance, that last available position estimate of the mobile device 350 (or apparatus 100 if it comprises the mobile payment entity, and in particular a mobile payment entity representing a mobile device) obtained by radio-network based positioning of the mobile device 350 (or apparatus 100 if it comprises the mobile payment entity, and in particular a mobile payment entity representing a mobile device) may be used as position information of the mobile device 350 (or apparatus 100 if it comprises the mobile payment entity, and in particular a mobile payment entity representing a mobile device), even if this position information deviates from the current position of the mobile device 350 (of from the current position of the apparatus 100 if it comprises the mobile payment entity, and in particular a mobile payment entity representing a mobile device).

And/or, as an example (iii), a location estimation at least partially obtained based on previous payment related data and point of interest data (e.g. determined by a previously performed action 220 of method 200) may be used as position information of the mobile payment entity (e.g. mobile device 350 or mobile payment entity 324 or apparatus 100 if it comprises the mobile payment entity), even if this position information deviates from the current position of the mobile payment entity. For instance, a user might had performed a payment transaction between his mobile payment entity and the third business entity 330 depicted in Fig. 3, e.g. by moving the mobile device 350 in proximity to cashier 331 or by moving the mobile payment entity 324 in proximity to cashier 331 (e.g. swiping the mobile payment entity 324 through a reader of casher 331), and based on the obtained payment-related data being associated with this payment transaction of the mobile payment entity (e.g. mobile device 350 or mobile payment entity 324) a location estimate of the mobile payment entity (e.g. mobile device 350 or or mobile payment entity 324) was determined at least partially by means of a previously performed method 200 performed by mobile device 350 or apparatus 100. Then, the user may have walked from the third business entity 330 to the first business entity 310 and makes another payment transaction - now between the same mobile payment entity as before (e.g. mobile device 350 or mobile payment entity 324) and the first business entity 310, e.g. by moving the mobile device 350 in proximity to cashier 311 of the first business entity 310 or by moving the mobile payment entity 324 in proximity to cashier 311 (e.g. swiping the mobile payment entity 324 through a reader of casher 311). Now, the location estimation determined by lastly performed method 200 may be used as location information of the mobile payment entity (e.g. mobile device 350 or mobile payment entity 324) (which represents a location estimation at least partially obtained based on previous payment related data and point of interest data), even if this position information deviates from the current position of the mobile payment entity (e.g. mobile device 350 or mobile payment entity 324) (which may now be located at the first business entity 310 instead of at the third business entity 330 in this example).

And/or, as an example (iii), a location estimation performed by the mobile device 380 being different from the mobile payment entity may be used as position information of the mobile payment entity (e.g. mobile device 350 or mobile payment entity 324 or apparatus 100 if it comprises the mobile payment entity), even if this position information deviates from the current position of the mobile payment entity. The mobile device 384 (e.g. depicted in Fig. 3) being different from the mobile payment entity 324 might be a smart home device, a smartphone, a tablet computer, a notebook computer, a smart watch or a smart band. As an example, it might be assumed that the mobile device 380 is carried by a user who performs the mobile payment by means of mobile payment entity 324 (which might be a token or a bankcard) and thus the mobile device 384 might be considered to be associated with the mobile payment entity 324, and, therefore, it might be assumed that a location estimation performed by the mobile device 384 may be used as position information of the mobile payment entity 324. For instance, said location estimation performed by the mobile device 380 might be performed based on GNSS based positioning performed by the mobile device 380 (e.g. as explained above with respect to the apparatus 100 or mobile device 350 or mobile payment entity 324) and/or might be performed based on radio-network based positioning performed by the mobile device 380 (e.g. as explained above with respect to the apparatus 100 or mobile device 350 or mobile payment entity 324).

Thus, for instance, for each of the examples (i) - (iv), the location information of the mobile payment entity (e.g. mobile device 350, or mobile payment entity 324, or apparatus 100 - if it comprises the mobile payment entity, and in particular comprising mobile payment entity representing a mobile device) may deviate from the from the current position of the mobile payment entity and thus it might be understood to be a kind of course mobile device location information. However, it might be assumed that the mobile payment entity has not moved so much compared to the location indicated by the location information of the mobile payment entity (e.g. only a few meters or e.g. up to 100m, or 200m, or 500m).

Nevertheless, according to the example embodiment, the location information of the mobile payment entity (e.g. mobile device 350 or mobile payment entity 324 or apparatus 100 if it comprises the mobile payment entity, and in particular comprises mobile payment entity representing a mobile device) might be used to ensure that for each of the one or more point of interest information of the point of interest data the location of the business entity of the respective point of interest information fulfills the distance criterion with respect to the location information associated with the mobile payment entity ( e.g. mobile device 350 or mobile payment entity 324 or apparatus 100 if it comprises the mobile payment entity, and in particular comprises mobile payment entity representing a mobile device) (i.e., the location information of the mobile payment entity). For instance, the distance criterion might specify that the distance between the location indicated by the location information associated with the mobile payment entity and the location of the business entity of the respective point of interest information is less or equal than a predefined distance threshold, wherein this predefined distance threshold might be 50m, or 100m, or 200m, or 500m, or 1km or any other well suited-distance. Then, it may be ensured that the one or more point of interest information of the point of interest data do not comprise a point of interest information of a business entity which's location does not fulfill the distance criterion with respect to the location information associated with the mobile payment entity, e.g. where the distance between the location of the business entity of the point of interest information and the location indicated by the location information associated with the mobile payment entity exceeds the predefined distance threshold. Accordingly, point of interest information of business entities being far away from the location indicated by the location information associated with the mobile payment entity may not be considered for determining the location estimate of the mobile payment entity in action 220 since those business entities can be excluded from the payment transaction of the mobile payment entity which was performed for obtaining the payment-related data in action 210. This may be helpful to reduce the search space in the point of interest data when performing action 220 and/or may avoid ambiguities, e.g. if a business entity at a completely distinct location (or a location far away) has the same name as the current business entity at which the payment transaction was performed.

Fig. 5 is a flow chart 500 illustrating an exemplary embodiment of a method 500 according to the invention, wherein this flow chart 500 may be part of method 200 and may be performed before action 220 is performed. Without limiting the scope of the invention, it is assumed in the following that the apparatus 100 as described above with respect to Fig. 1 performs the steps of flow chart 500, wherein apparatus 100 may be a mobile device (e.g. mobile device 350) or a server, e.g. server 360, or another apparatus.

Method 500 comprises selecting the one or more point of interest information from a plurality of point of interest information based on the distance criterion, i.e., the distance criterion as example above.

Thus, the point of interest data may comprise a plurality of point of interest information, wherein each point of interest information of the plurality of interest information is associated with a business entity which is configured to provide payment for mobile payment entities and is associated with a location of the respective business entity and may be associated with an identifier information (e.g. a name information) of the respective business entity, and, as an example, the one or more point of interest information of the point of interest may represent a subset of one or more point of interest information of the plurality of point of interest information, as explained with respect to the preceding example embodiment.

In action 500, the one or more point of interest information may be selected from the plurality of point of interest information such that each point of interest information of the one or more point of interest information of the point of interest data fulfills the distance criterion with respect to the location information associated with the mobile device 350, e.g. as explained above, in particular by using the predefined distance threshold, i.e., each of the selected one or more point of interest information of the point of interest data the location of the business entity of the respective point of interest information fulfills the distance criterion with respect to the location information associated with the mobile payment entity (e.g. mobile device 350 or mobile payment entity 324 or apparatus 100 if it comprises the mobile payment entity, and in particular comprises mobile payment entity representing a mobile device) (i.e., the location information of the mobile payment entity).

Fig. 6 is a flow chart 600 illustrating an exemplary embodiment of a method 600 according to the invention, wherein this flow chart 600 may be part of method 200 and may be performed after action 220 is performed. Without limiting the scope of the invention, it is assumed in the following that the apparatus 100 as described above with respect to Fig. 1 performs the steps of flow chart 600, wherein apparatus 100 may be a mobile device (e.g. mobile device 350) or a server, e.g. server 360 or another apparatus.

Method 600 comprises associating mobile payment entity related measurement data with the determined location estimate of the mobile payment entity (e.g. mobile device 350 or mobile payment entity 324 or apparatus 100 if it comprises the mobile payment entity, and in particular comprises mobile payment entity representing a mobile device) (action 610). For instance, if in action 220 a location estimate of mobile payment entity has been determined in action 610 mobile device related measurement data can be associated with this determined location estimate of the mobile payment entity.

The mobile payment entity related measurement data may by any data measured by a mobile device or obtained based on data measured by a mobile device, e.g. by means of at least one sensor of the mobile device, wherein, if the mobile payment entity represents a mobile device (e.g. mobile device 350), the mobile device which measures (or obtains) the mobile payment entity related measurement data may represent the mobile payment entity, or, as another example, if the mobile payment entity is a token or a bankcard, the mobile device which measures (or obtains) the mobile payment entity related measurement data may represent a mobile device being different from the mobile payment entity (e.g. mobile device 380).

For instance, if the mobile device 380 which measures (or obtains) the mobile payment entity related measurement data is different from the mobile payment entity 324, the mobile device might be a smart home device, a smartphone, a tablet computer, a notebook computer, a smart watch or a smart band. As an example, it might be assumed that the mobile device 380 is carried by a user who performs the mobile payment by means of mobile payment entity 324 (which might be a token or a bankcard) and thus the mobile payment entity related measurement data can be considered to be related with the mobile payment entity 324 (and therefore can be considered to represent mobile payment entity related measurement data) since the mobile device 380 can be assumed to be in proximity with the mobile payment entity 324. Furthermroe, mobile device 380 might be configured to communicate with server 360 in order to transmit the obtained (or measured) mobile payment entity related measurement data to the server 360.

For instance, the mobile device related measurement data comprises at least one of the following:
(i) a radio scan (e.g. performed by the mobile device 350 being the mobile payment entity or performed by the mobile device 380 being different from the mobile payment entity 324);
(ii) a temperature (e.g measured by the mobile device 350 being the mobile payment entity or measured by the mobile device 380 being different from the mobile payment entity 324);
(iii) a pressure (e.g. measured by the mobile device 350 being the mobile payment entity or measured by the mobile device 380 being different from the mobile payment entity 324).

For example (i), the apparatus 100 (if it comprises the mobile device being the mobile payment entity) and/or mobile device 350 and/or mobile device 380 might be configured to support radio-network based positioning (e.g. non GNSS based radio-network based positioning), and apparatus 100 (if it comprises the mobile device) and/or mobile device 350 and/or mobile device 380 may comprise a radio interface (e.g. a radio transceiver) which is configured to support such a non-GNSS based radio positioning system. As an example, the radio interface is configured to transmit and receive radio signals in line with a respective radio network system. For instance, said radio network system may be one of: (i) WLAN, (ii) low-power wide-area network (LPWAN), (iii) a Bluetooth (e.g. Bluetooth standard supporting a low energy mode); (iv) a cellular radio system. The radio interface enables apparatus 100 (if it comprises the mobile device) and/or mobile device 350 and/or mobile device 380 to scan for observable radio signals transmitted (e.g. broadcasted) by the respective network system. Therein, a BLE radio signal may be understood to be observable if the radio signal is receivable with a minimum quality (e.g. a minimum signal-to-noise ratio and/or a minimum signal power, e.g. at least -90 dBm or - 95 dBm). Moreover, the radio interface is configured determine one or more radio signal parameters of radio signals observed (e.g. received) when scanning for observable radio signals of the radio network system. To this end, the radio interface may for example extract, from each observed radio signal, the respective identifier (e.g. UUID) contained therein and measure the respective received signal strength of each observed radio signal. The extracted identifiers and the received signal strength values may then for example used as scanning results for the respective radio scan performed by the apparatus 100 (if it comprises the mobile device) and/or mobile device 350 and/or mobile device 380. For instance, such a radio scan be represent a fingerprint. As an example, apparatus 100 (if it comprises the mobile device) and/or mobile device 350 and/or mobile device 380 may transmit the radio scan to a positioning server, e.g. server 360, such that the positioning server may use this received radio scan for determining and/or updating a radio map used for the non-GNSS based radio positioning system.

And/or, for example (ii), the apparatus 100 (if it comprises the mobile device being the mobile payment entity) and/or mobile device 350 and/or mobile device 380 might comprise a temperature sensor and the mobile device related measurement data comprises a temperature measured by the mobile device.

And/or, for example (iii), the apparatus 100 (if it comprises the mobile device being the mobile payment entity) and/or mobile device 350 and/or mobile device 380 might comprise a pressure sensor and the mobile device related measurement data comprises a pressure measured by the mobile device.

According to an example embodiment of method 600, said payment-related data comprises time information regarding the payment transaction, wherein method 600 comprises: checking whether a time difference between previously obtained mobile payment entity related measurement data and the time information of the payment-related information is less than a predefined time distance threshold, and if yes, associating the previously obtained mobile payment entity related measurement data with the determined location estimate of the mobile payment entity (e.g. action 610). For instance, the previously obtained mobile payment entity related measurement data may be any of the one of the following, as mentioned before: (i) a radio scan; (ii) a temperature; (iii) a pressure.

Thus, the time information regarding the payment transaction is indicative of the time when the payment transaction (which served as basis of the payment-related data obtained in action 210 of method 200) was made. E.g., if the measurement data is not too old compared to time when the payment transaction was performed, i.e., if the time difference between previously obtained mobile payment entityrelated measurement data and the time information of the payment-related information is less than a predefined time distance threshold, then it may be assumed that the measurement data can be associated with the location estimate determined in action 220 and the previously obtained mobile payment entityrelated measurement data with the determined location estimate of the mobile payment entity. For instance, the predefined time distance threshold might be 1sec, 5sec, 10sec, 30sec, lmin or 5min or any other well-suited predefined time distance threshold. Furthermore, as an example, it may be assumed that the time difference between previously obtained mobile payment entityrelated measurement data and the time information of the payment-related information represent the time different between the time point when the respectively mobile payment entityrelated measurement data was obtained by the mobile device being the mobile payment entity. And/or, for instance, the time information regarding the payment transaction must not necessarily represent the exact time when the payment transaction was performed. Alternatively, the time of apparatus 100 (if it comprises the mobile device being the mobile payment entity) and/or mobile device 350 and/or mobile device 380 after action 210 and/or action 220 is performed may be used since it might be assumed that action 210 and/or action 220 may be performed more or less immediately after the payment transaction was performed and this time resolution may be considered to be sufficient to check whether the payment transaction is considered to be outdated or not.

Furthermore, as an example, if said checking yields a negative result (i.e., if the time difference between previously obtained mobile payment entityrelated measurement data and the time information of the payment-related information is not less than a predefined time distance threshold), method 600 may comprise causing the mobile device being the mobile payment entity (e.g. the apparatus 100 (if it comprises the mobile device) and/or mobile device 350) and/or the mobile device 380 to obtain new mobile payment entityrelated measurement data and associating the newly obtained mobile payment entity related measurement with the determined location estimate of the mobile payment entity (e.g. action 610). In this case, it might be assumed that the previously obtained mobile payment entity related measurement data is outdated and is likely not obtained at that location where the payment transaction was performed. Thus, a new measurement for obtaining mobile measurement payment entity related data can be trigged and this obtained mobile measurement payment entityrelated data is associated with the location estimate of the mobile payment entity (e.g. mobile device 350 or mobile payment entity 324) determined in action 220 of method 200.

According to an example embodiment of method 600, method 600 may comprise, after said obtaining payment-related data being associated with a payment transaction of a mobile payment entity (e.g. mobile device 350 or mobile payment entity 324 or apparatus 100 if it comprises the mobile payment entity, and in particular comprises mobile payment entity representing a mobile device) (action 210 of method 200), causing the mobile payment entity (e.g. mobile device 350 or mobile payment entity 324 or apparatus 100 if it comprises the mobile payment entity, and in particular comprises mobile payment entity representing a mobile device) or the mobile device 380 to obtain mobile device related measurement data and associating the obtained mobile payment entity related measurement data with the determined location estimate of the mobile payment entity (e.g. mobile device 350 or mobile payment entity 324 or apparatus 100 if it comprises the mobile payment entity, and in particular comprises mobile payment entity representing a mobile device) (e.g. action 610).

In the example embodiment, method 600 may automatically trigger the mobile payment entity (e.g. mobile device 350 or mobile payment entity 324 or apparatus 100 if it comprises the mobile payment entity, and in particular comprises mobile payment entity representing a mobile device) or the mobile device 380, e.g. after action 210 or after action 220 of method 200 is performed, to obtain the mobile payment entity related measurement data and then this obtained mobile payment entityrelated measurement data is associated with the determined location estimate of the mobile payment entity (e.g. action 610).

Fig. 7 is a block diagram of an exemplary embodiment of mobile device 700 according to the invention. In the following, without any limitations it is assumed that apparatus 100 and/or that mobile device 350 and/or that mobile device 380 may correspond to this mobile device 700. For instance, mobile device 700 might represent an example of the mobile payment entity.

Mobile device 700 comprises a processor 701. Processor 701 may represent a single processor or two or more processors, which are for instance at least partially coupled, for instance via a bus. Processor 701 executes a computer program code stored in program memory 702 (e.g. computer program code causing mobile device 700 to perform any one embodiment of the disclosed method (e.g. the steps of any one embodiment of the disclosed method) or a part thereof (e.g. at least some steps of any one embodiment of the disclosed method) (in particular method 200 and/or method 400 and/or method 500 and/or method 600 as described with respect to of Figs. 2, 4, 5 and 6), when executed on processor 701), and interfaces with a main memory 703. Program memory 702 may also contain an operating system for processor 701, wherein, for instance, this operating system may be an iOS operating system or an Android operating system or an Android based operating system or any other well-suited operating system. Furthermore, as an example embodiment (e.g. if mobile device 700 is configured to perform non-GNSS positioning including radio-network based positioning), radio map information representing a radio map in an environment of the radio-network system may be used for radio-network based positioning and may be stored e.g. in main memory 703 or in program memory 702. Some or all of memories 702 and 703 may also be included into processor 701. One of or both of memories 702 and 703 may be fixedly connected to processor 701 or at least partially removable from processor 701, for example in the form of a memory card or stick.

A program memory (e.g. program memory 702) may for example be a non-volatile memory. It may for instance be a FLASH memory (or a part thereof), any of a ROM, PROM, EPROM, MRAM or a FeRAM (or a part thereof) or a hard disc (or a part thereof), to name but a few examples. For example, a program memory may for instance comprise a first memory section that is fixedly installed, and a second memory section that is removable, for instance in the form of a removable SD memory card.

A main memory (e.g. main memory 703) may for example be a volatile memory. It may for example be a DRAM memory, to give non-limiting example. It may for instance be used as a working memory for a processor (e.g. processor 701) when executing an operating system and/or programs.

Mobile device 700 comprises a short-range communication interface 707 which is configured to support payment transactions, e.g. contactless payment transactions. Processor 701 may control this short-range communication interface 707 which is configured for receiving and, optionally, transmitting signals via a short-range communication link which might be established between the short-range interface 707 and an other device, e.g. a cashier or a reader of a cashier, e.g. of one of cashiers 311, 321, 331. For instance, the short-range communication interface 707 might be configured in such a way that the short-range communication link with the other device can only be established if distance between the short-range communication interface 707 and the other device is less than 5m, 2m, 1m, 0.5m, 0.2m, 0.1m, 0.05m, or 0.02m. Thus, it may be assumed that a user of the mobile device 700 must bring (or move) the mobile device 700 in proximity of the other device (e.g. a cashier or a reader of a cashier also supporting the short-range communication link for payment transaction) such that the payment transaction can be performed via the short-range communication interface 707. As a non-limiting example, the short-range communication interface may comprise radio-frequency identification (RFID) or near field communication (NFC) interface, such that the payment transaction enabled by the mobile device 700 and by the short-range communication interface 707 may be a contactless payment transaction which might use radio-frequency identification (RFID) or near field communication (NFC, e.g. Samsung Pay, Apple Pay, Google Pay, Fitbit Pay, Merpay or any bank mobile application that support contactless payment), wherein the contactless payment transaction may be configured for making secure payments. RFID and NFC are two examples of the above-mentioned short-range communication but it has to be understood that other technologies for short-range communication may be used by the contactless payment transaction functionality of the mobile device 700 and the corresponding other device, which might be a cashier, e.g. cashier 311, 321 or 331 or a reader of cashiers 311, 312, 313). Furthermore, it might be assumed that contactless payments of the mobile device 700 are made in close physical proximity with respect to the other device (e.g. one of cashiers 311, 312, 313 or a reader of cashiers 311, 312, 313), e.g. the distance between mobile device 700 and the other device (e.g. one of cashiers 311, 312, 313 or a reader of cashiers 311, 312, 313) must be less than 5m, 2m, 1m, 0.5m, 0.2m, 0.1m, 0.05m, or 0.02m, wherein this distance might be the distance between an antenna of the mobile device 350 used for short-range communication link and the reader of the other device.

When the mobile device 700 (if representing the mobile payment entity) performs a payment transaction with the other device (e.g. one of cashiers 311, 312, 313 or a reader of one of cashiers 311, 312, 313), payment-related data being associated with this payment transaction are received by the mobile device 700. At least a part of this received payment-related data may be at least a part (or all) of the payment-related data used in action 210 of method 200. For instance, if the mobile device 700 performs method 200 (and/or method 400 and/or method 500) then at least part (or all) of the payment-related data received via the short-range communication interface 707 can be used by the mobile device 710 in action 710 as a part (or all) of the payment-related data in action 210 of method 200. Or, as another example, if method 200 is performed by different device, e.g. by server 360 depicted in Fig. 6, the mobile device 700 might transmit at least part (or all) of the payment-related data received via the short-range communication interface 707 when performing a payment transaction with the other device to the different device (e.g. server 360), wherein, for instance, optional radio interface 704 of mobile device 700 might be used for this transmission.

As an example, mobile device 700 may comprise an optional radio interface 704. Processor 701 may control this optional radio interface 704 which is configured for receiving and, optionally, transmitting radio signals. A radio interface may be or may comprise a radio receiver circuit and/or a radio transmitter circuit and/or a radio transceiver circuit. Such circuits may comprise modulators, filters, mixers, switches and/or one or more antennas to allow transmission and/or reception of radio signals.

As an example embodiment, e.g. if mobile device 700 is configured to perform non-GNSS positioning including radio-network based positioning, the optional radio interface may comprise at least one of (i) a cellular radio transceiver which is configured to communicate via a cellular radio network (e.g. to transmit and receive cellular radio signals), (ii) a WLAN transceiver which is configured to communicate via a WLAN network (e.g. according to one of the IEEE 802.11 standards or any other WiFi/WLAN standard), (iii) a Bluetooth transceiver (which might be a Bluetooth Lower Energy (BLE) transceiver), (iv) a low-power wide-area transceiver configured to communication via a low-power wide-area network (LPWAN).

For example, the cellular radio transceiver may be or may comprise a 2G/3G/4G/5G radio transceiver.

For instance, the mobile device 700 might transmit at least part (or all) of the payment-related data received via the short-range communication interface 707 when performing a payment transaction with the other device to the different device (e.g. server 360), via the optional interface 704 of mobile device 700 (e.g. via the internet).

As an example, mobile device 700 may comprise a GNSS interface 706. Processor 701 may control the GNSS (Global Navigation Satellite System) interface 706 which may comprise any kind of global navigation satellite signal receiver (e.g. a GNSS sensor), e.g. a GPS and/or a Galileo and/or a GLONASS signal receiver (e.g. GPS and/or a Galileo and/or a GLONASS signal sensor) or any other well-suited satellite signal receiver (e.g. satellite signal sensor) which can be used for GNSS positioning. The GNSS interface may be configured to receive corresponding satellite signals and to determine the current position of apparatus 700 based on the signals, e.g. possibly using provided assistance data, or to provide the signals (or at least a part of the signals) to an application of apparatus 700 (wherein the application may be performed by processor 701) such that the application determines the current position based on the provided signals. As an example, this application may be denoted as GNSS location application. For instance, GNSS interface 706 may be used in order determine the location information associated with the mobile device 700. GNSS related position may be understood in a way that the GNSS related position is not determined based on a non-GNSS positioning system, e.g. a radio network based positioning system like a WiFi-based positioning system using fingerprints of access points and a radio maps to estimated the position of a mobile device.

Moreover, as an example, mobile device 700 may comprise one or more optional sensors 705, and the processor 701 controls the one or more sensors 705 configured for determining sensor information from the one or more optional sensors 705. The determined sensor information may be provided to processor 701. For instance, this determined sensor information might comprise the mobile payment entity related measurement data (e.g. as used in action 610 of method 600) or might be used to obtain the mobile payment entity related measurement data (e.g. as used in action 610 of method 600). As a non-limiting example, said one or more optional sensors 705 might comprise a temperature sensor and/or a pressure (e.g. air pressure) sensor.

As an example embodiment, mobile device 700 might be configured to perform non-GNSS positioning including radio-network based positioning by using the radio interface 704 for a radio positioning system. Thus, mobile device 701 may be enabled for or support such a non-GNSS based radio positioning system. This may be understood to mean that the mobile device 400 is configured to estimate (e.g. determine) or to cause estimating (e.g. determining) its position at least partially based on radio signal parameters of one or more radio signals (e.g. one or more terrestrial radio signals) obtained at this position (e.g. obtained as a scanning result of scanning for observable radio signals at this position). Estimating (e.g. determining) of a position of the mobile device 700 at least partially based on (a) radio signal parameter(s) may be understood to mean that the estimating is performed as a function of the radio signal parameter(s). It is however to be understood that the estimating may optionally depend on further information like a radio map, which may be stored in main memory 703 or main memory 702. For example, such a radio map may be configured to enable mobile device 700 to estimate its position at least partially based on this radio map when the mobile device 700 is located in the area covered by the radio map. For example, the radio map is represented by radio map information which may be provided (e.g. transmitted) by a positioning server to the mobile device 700 and/or which may be hold available by the mobile device 700 (e.g. stored in memory means 702 or 704 of the mobile device 700). For example, the radio map contains or represents a respective radio model for a plurality of radio devices transmitting (e.g. broadcasting) radio signals that are observable within the area covered by the radio map. If the radio map covers a building, the radio map may contain or represent, for each floor of the building, a respective radio model for a plurality of radio devices transmitting (e.g. broadcasting) radio signals that are observable on the respective floor of the building.

A respective radio model for a respective radio device of the plurality of radio devices may be understood to represent at least the expected radio coverage of the respective radio device (e.g. on a certain floor of a building). For example, the radio model of such a radio device may describe the coverage area (e.g. on a certain floor of a building) within which radio signals transmitted or triggered to be transmitted by this radio device are expected to be observable. An example for such a radio model is a radio image representing an expected radio signal strength field of the radio signals transmitted or triggered to be transmitted by this radio device. The real radio coverage of such a radio positioning support device may however deviate from the expected radio coverage as described by such a radio model. As disclosed above, the radio map may be determined at the positioning server during a training stage of the non-GNSS based radio positioning system. Causing of estimating (e.g. determining) of a position of a mobile device 700 at least partially based on the radio signal parameter(s) may be understood to mean that the radio signal parameter(s) are provided (e.g. transmitted) by the mobile device 700 to a positioning server to cause the positioning server to estimate (e.g. determine) a position of the mobile device 700 at least partially based on the radio signal parameter(s) and wherein the mobile device 700 received the estimated position from the positioning server.

The one or more radio signals may be terrestrial radio signals. Examples of such a terrestrial radio signal are a Bluetooth signal, a Bluetooth Low Energy (BLE) signal, a cellular network signal, an low-power wide-area network (LPWAN) signal or a Wireless Local Area Network (WLAN) signal. The Bluetooth standards are specified by the Bluetooth Special Interest Group and are presently available under https://www.bluetooth.com/. A cellular network may for example be mobile phone network like a 2G/3G/4G/5G cellular communication network. The 2G/3G/4G/5G cellular radio communication standards are developed by the 3GPP and presently available under http://www.3gpp.org/. Examples of LPWAN specifications are the LoRaWAN specification developed by the LoRa Alliance and presently available under https://lora-alliance.org/ as well as the Narrowband IoT (NB-IoT) specification developed by 3GPP and presently available under http://www.3gpp.org/. WLAN is for example specified by the standards of the IEEE 802.11 family (http://www.ieee.org/).

A radio signal parameter of a certain radio signal may for example be obtained by the mobile 400 as a scanning result when scanning for observable radio signals at a certain position (e.g. for estimating its position). Therein, a radio signal may be understood to be observable at a certain position if the radio signal is receivable with a minimum quality (e.g. a minimum signal-to-noise ratio and/or a minimum signal power, e.g. at least -90 dbm or -95 dbm) at this position. For example, the mobile device 700 may determine at least one respective radio signal parameter for each radio signal observed when scanning for radio signals at a certain position.

A radio signal parameter of a certain radio signal may be understood to be at least one of (1) an information (e.g. an identifier) contained in the radio signal and (2) a representation (e.g. an indicator or a value) of a physical quantity (e.g. a received signal strengths) of the radio signal. Accordingly, a radio signal parameter may be determined by at least one of (1) extracting information contained in the radio signal and (2) measuring a physical quantity (e.g. a received signal strength) of the radio signal.

For example, the mobile device 350, 380, 700 may scan for observable radio signals at a position for estimating its position (e.g. based on a non-GNSS based radio positioning system as disclosed above).

Furthermore, as an example embodiment, mobile device 700 may use optional radio interface 704 to communicate with a server (e.g. a positioning server) (e.g. via the internet). For example, mobile device 700 may use radio interface 704 to transmit radio fingerprint observation reports (e.g. including a radio scan) to a positioning server and/or receive radio map information from a positioning server and/or to transmit the radio signal parameter(s) to a positioning server to cause the positioning server to estimate (e.g. determine) a position of the mobile device 700 at least partially based on the radio signal parameter(s) and to receive the estimated position from the positioning server. And/or, as an example, mobile device 380, 700 may use radio interface 704 to transmit the mobile payment entity related measurement data (e.g. as used in action 610 of method 600) to the server.

The components 702 to 706 of mobile device 700 may for instance be connected with processor 701 by means of one or more serial and/or parallel busses.

It is to be understood that mobile device 700 may comprise various other components like a user interface for receiving user input.

For instance, mobile device 700 may be an Internet-of-Thing (IoT) device, a smart home device, a smartphone, a tablet computer, a notebook computer, a smart watch, and a smart band or any other well-suited mobile device. As an example, mobile device 700 may represent apparatus 100 and/or mobile device 350.

Fig. 8 is a block diagram of an exemplary embodiment of a server 800 according to the invention, which may (for instance) represent server 360 depicted in Fig. 3. Furthermore, as an example embodiment, server 800 may be considered to represent a cloud component. Furthermore, as an example, server 800 might comprise apparatus 100 (e.g. if apparatus 100 represents a server and not a mobile device (and/or not a mobile payment entity)).

Server 8 comprises a processor 801. Processor 800 may represent a single processor or two or more processors, which are for instance at least partially coupled, for instance via a bus. Processor 800 executes a computer program code stored (e.g. computer program code causing server 8 to perform any one embodiment of the disclosed method (e.g. the steps of any one embodiment of the disclosed method) or a part thereof (e.g. at least some steps of any one embodiment of the disclosed method) (in particular method 200, and/or method 400, and/or method 500 and/or method 600 as described with respect to of Figs. 2, 3, 4, 5 and 6), in program memory 801, and interfaces with a main memory 802.

Program memory 801 may also contain an operating system for processor 800 and, for instance, radio map information representing a radio map of a predetermined environment system (e.g. system 300). Some or all of memories 801 and 802 may also be included into processor 800. One of or both of memories 801 and 802 may be fixedly connected to processor 800 or at least partially removable from processor 800, for example in the form of a memory card or stick.

Processor 800 further controls a network interface 803 which is configured to communicate via a communication network (e.g. the internet). Server 8 may use network interface 803 to communicate with mobile devices, e.g. mobile device 350 of Fig. 2 (e.g. via the internet) and/or apparatus 100 (if apparatus 100 represents a mobile device) and/or mobile device 700 (e.g. via optional radio interface 704 of mobile device 700). As an example, server 8 might be configured to receive payment-related data from the mobile device (e.g. mobile device 350 or mobile device 700) which performed a payment transaction with the other device (e.g. a cashier or a reader of a cashier, e.g. of one of cashiers 311, 321, 331) via the network interface, and then, server 8 might obtain the payment-related data in action 210 of method 200 based on this received payment-related data, wherein the obtained payment-related data may at least partially comprise the received payment-related data or may comprise at least part of the received payment-related data. And/or, for example, server 8 may use network interface 803 to communicate with a cashier (e.g. of one of cashiers 311, 321, 331) via the network interface, and then, server 8 might receive payment-related data from the cashier after a mobile payment entity (e.g. mobile device 350 or mobile payment entity 324) performed a payment transaction with the cashier (e.g. one of cashiers 311, 321, 331, wherein a reader of the cashier may be used to perform the payment transaction), and then, server 8 might obtain the payment-related data in action 210 of method 200 based on this received payment-related data, wherein the obtained payment-related data may at least partially comprise the received payment-related data or may comprise at least part of the received payment-related data.

And/or, for instance, server 8 may use network interface 803 to receive radio fingerprint observation reports (e.g. including a radio scan from mobile devices (e.g. mobile device 350) and/or transmit radio map information to mobile devices (e.g. mobile device 350). And/or, as an example, server 8 may use radio interface 803 to receive the mobile payment entity related measurement data (e.g. as used in action 610 of method 600) from the mobile payment entity, e.g. from. mobile device 350, or from the mobile device 380 being different from the mobile payment entity.

The components 801 to 803 of server 8 may for example be connected with processor 800 by means of one or more serial and/or parallel busses.

It is to be understood that server 8 may comprise various other components like a user interface for receiving user input.

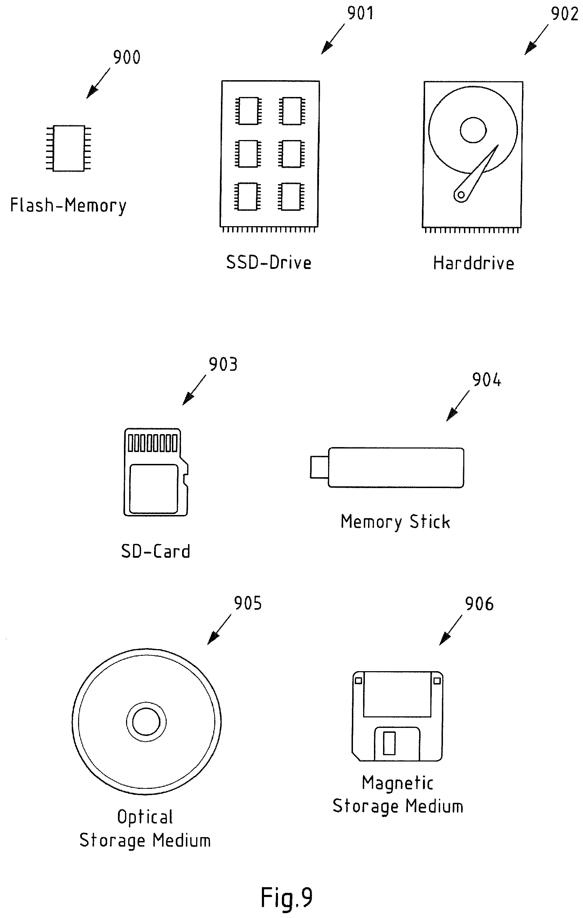

Fig. 9 is a schematic illustration of examples of tangible and non-transitory computer-readable storage media according to the present invention that may for instance be used to implement memory 701 of Fig. 7, and memory 801 of Fig. 8. To this end, Fig. 9 displays a flash memory 900, which may for instance be soldered or bonded to a printed circuit board, a solid-state drive 901 comprising a plurality of memory chips (e.g. Flash memory chips), a magnetic hard drive 902, a Secure Digital (SD) card 903, a Universal Serial Bus (USB) memory stick 904, an optical storage medium 905 (such as for instance a CD-ROM or DVD) and a magnetic storage medium 906.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:
(a) hardware-only circuit implementations (such as implementations in only analog and/or digital circuitry)
(b) combinations of circuits and software (and/or firmware), such as: (1) to a combination of processor(s) or (2) to sections of processor(s)/ software (including digital signal processor(s)), software, and memory(ies) that work together to cause an apparatus, such as a mobile phone, to perform various functions) and
(c) to circuits, such as a microprocessor(s) or a section of a microprocessor(s), that require software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.

Any of the processors mentioned in this text, in particular but not limited to processors 700 and 800 of Figs. 7 and 8, could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or steps described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

The wording "A, or B, or C, or a combination thereof' or "at least one of A, B and C" may be understood to be not exhaustive and to include at least the following: (1) A, or (2) B, or (3) C, or (4) A and B, or (5) A and C, or (6) B and C, or (7) A and B and C.

It will be understood that all presented embodiments are only exemplary, and that any feature presented for a particular exemplary embodiment may be used with any aspect of the invention on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

## Claims

1. A method comprising:
- obtaining payment-related data being associated with a short-range payment transaction of a mobile payment entity,
- determining a location estimate of the mobile payment entity at least partially based on the payment-related data and point of interest data.

2. The method according to claim 1, wherein said point of interest data comprises one or more point of interest information, wherein each point of interest information of the one or more point of interest information is associated with a business entity which is configured to provide payment for mobile payment entities and is associated with a location of the respective business entity.

3. The method according to claim 2, wherein said determining a location estimate of the mobile payment entity comprises detecting which location of the one or more point of interest information can be associated with the payment-related data, and determining the location estimate of the mobile payment entity to be the location associated with the point of interest information which is detected to be associated with the payment-related data.

4. The method according to any of claims 2 to 3, wherein the location of the business entity associated with a point of interest information of the one or more point of interest information represents the location of a cashier of the business entity.

5. The method according to any of claims 3 to 4, wherein said detecting which location information of the one or more point of interest information can be associated with the payment-related data comprises detecting which point of interest information of the one or more point of interest information matches best with said payment-related data.

6. The method according to claim 5, wherein said payment-related data comprises identifier information of the business entity being associated with the payment transaction, and wherein said detecting which point of interest information of the one or more point of interest information matches best with said payment-related data comprises detecting which business entity associated with a point of interest information of the one or more point of interest information matches best with the identifier information of the business entity being associated with the payment transaction.

7. The method according to claim 6, wherein said identifier information of the business entity being associated with the payment transaction comprises a name information of the business entity being associated with the payment transaction and wherein each point of interest information of the one or more point of interest information comprises a name information of the business entity associated with the respective point of interest information, and wherein said detecting which business entity associated with a point of interest information of the one or more point of interest information matches best with the identifier information of the business entity being associated with the payment transaction comprises determining which name information of a business entity associated with a point of interest information of the one or more point of interest information matches best with the name information of the business entity of the payment-related data.

8. The method according to any of claims 2 to 7, wherein the location of the business entity of a point of interest information of each point of interest information of the one or more point of interest information fulfills a distance criterion with respect to a location information associated with the mobile payment entity, wherein, in particular, said location information associated with the mobile payment entity represents a coarse mobile payment entity location information.

9. The method of claim 8, wherein said location information comprises an information on a previous location estimate of the mobile payment entity, in particular a previous location estimate obtained by one of the following:
(i) a GNSS based positioning of the payment entity;
(ii) a radio-network based positioning of the payment entity,
(iii) a location estimation at least partially obtained based on previous payment related data and point of interest data,
(iv) a location estimation performed by a mobile device being different from the mobile payment entity.

10. The method according to any of claims 8-9, comprising selecting the one or more point of interest information from a plurality of point of interest information based on the distance criterion.

11. The method according to any of the preceding claims, comprising associating mobile payment entity related measurement data with the determined location estimate of the mobile payment entity, wherein, in particular, the mobile payment entity related measurement data comprises at least one of the following:
(i) a radio scan;
(ii) a temperature;
(iii) a pressure.

12. The method according to claim 11, wherein at least a part of the payment entity related measurement data is obtained by the mobile payment entity and/or at least a part of the payment entity related measurement data is obtained by a mobile device.

13. The method according to any of claims 11 to 12, wherein said payment-related data comprises time information regarding the payment transaction, the method comprising:
- checking whether a time difference between previously obtained mobile payment entity related measurement data and the time information of the payment-related information is less than a predefined time distance threshold, and if yes, associating the previously obtained mobile payment entity related measurement data with the determined location estimate of the mobile payment entity.

14. The method according to claim 13, comprising, if said checking yields a negative result, causing to obtain new mobile payment entity measurement related data and associating the newly obtained mobilepayment entity measurement related data with the determined location estimate of the mobile payment entity.

15. The method according to any of claims 11 to 14, comprising, after said obtaining payment-related data being associated with a payment transaction of a mobile payment entity, causing to obtain mobile payment entity related measurement data and associating the obtained mobile payment entity related measurement data with the determined location estimate of the mobile payment entity.

16. The method according to any preceding claims, wherein said short-range payment transaction is a contactless payment transaction.

17. The method according to any of the preceding claims, wherein the method is performed by the mobile payment entity, the method comprising performing the short-range payment transaction, and wherein said obtained payment-related data being associated with a short-range payment transaction of a mobile payment entity is payment-related data obtained from the performed short-range payment transaction.

18. The method according to any of claims 1 to 16, wherein the method is performed by an apparatus being different from the mobile payment entity, wherein said obtained payment-related data being associated with a short-range payment transaction of a mobile payment entity is payment-related data received from the mobile payment entity, in particular via a server and/or a payment system.

19. The method according to any of the claims 1 to 16 and 18, wherein said mobile payment entity is a token, in particular an authentication token like a bank card.

20. A computer program code, the computer program code when executed by a processor causing an apparatus to perform the method according to any of claims 1 to 19.

21. At least one apparatus, the at least one apparatus comprising means for performing the method according to any of claims 1 to 19.

22. The apparatus according to claim 21, wherein the at least one apparatus is a mobile payment entity and/or a server and/or a token.
